# NEUE EUROPÄISCHE PATENTSCHRIFT

(11) **EP 2 740 208 B2**
(45) Veröffentlichungstag und Bekanntmachung des Hinweises auf die Entscheidung über den Einspruch: **07.06.2023**
(45) Hinweis auf die Patenterteilung: 24.06.2020
(21) Anmeldenummer: 12745397.5
(22) Anmeldetag: 16.07.2012
(51) Int. Cl.: H02M 7/219, H02J 5/00, H02J 7/00

(54) **ELEKTRONISCHES GERÄT, INSBESONDERE ÜBERTRAGERKOPF, UND SYSTEM ZUR KONTAKTLOSEN ENERGIEÜBERTRAGUNG**
ELECTRONIC DEVICE, IN PARTICULAR TRANSMITTER HEAD, AND SYSTEM FOR WIRELESS ENERGY TRANSFER
APPAREIL ÉLECTRONIQUE, EN PARTICULIER TÊTE DE TRANSMISSION, ET SYSTÈME DE TRANSFERT D'ÉNERGIE SANS CONTACT

(30) Priorität: 02.08.2011 DE 102011109100
(43) Veröffentlichungstag der Anmeldung: 11.06.2014
(73) Patentinhaber: SEW-EURODRIVE GmbH & Co. KG, 76646 Bruchsal (DE)
(72) Erfinder: KUTZ, Michael, 76661 Philippsburg (DE); JAHN, Nils-Malte, 69124 Heidelberg-Kirchheim (DE)
(74) Vertreter: Tüngler, Eberhard
(86) Internationale Anmeldenummer: PCT/EP2012/002980
(87) Internationale Veröffentlichungsnummer: WO 2013/017200

(56) Entgegenhaltungen:
- EP-A1- 0 933 865
- EP-A2- 1 253 695
- WO-A1-02/15377
- WO-A1-2007/012272
- WO-A2-2004/066481
- DE-A1-102006 022 222
- DE-A1-102006 022 223
- DE-A1-102007 060 283
- FR-A1- 2 655 785
- US-A1- 2006 267 523
- US-A1- 2009 016 090
- US-A1- 2010 007 214
- US-A1- 2010 046 259
- W. X. ZHONG et al.: "Generalized self-driven AC-DC synchronous rectification techniques for single- & multiphase systems", The 2010 Interna- tional Power Electronics Conference - ECCE ASIA -, Sap- poro, Japan, 2010, pages 2098-2105,
- U. SCHWALBE: "Vergleichende Untersuchungen dreistufiger Schaltnetzteiltopologien im Ausgangsleistungsbereich bis 3 kW", Dissertation, 2008, pages 1-248, Ilmenau
- H. MIURA et al.: "A synchronous rectification using a digital PLL technique for contactless power supplies", IEEE Transactions on Magnetics, vol. 41, no. 10, 17 October 2005 (2005-10-17), pages 3997-3999, DOI: 10.1109/TMAG.2005.854860
- Anonymous: "Gießharz", Wikipedia, 18 June 2010 (2010-06-18), pages 1-3,
- Anonymous: "Epoxidharz", Wikipedia, 7 March 2010 (2010-03-07), pages 1-5,
- Anonymous: "Wärmeleitfähigkeit", Wikipedia, 24 June 2011 (2011-06-24), pages 1-4,
- Anonymous: "Wärmeübergangskoeffizient", Wikipedia, 30 April 2011 (2011-04-30), pages 1-5,
- MEYERS: "Wärmeschwingungen" In: "Meyers Lexikon der Technik und der exakten Naturwissenschaften", 1970 page 2704,
- Anonymous: "Gleichrichter", Wikipedia, 25 March 2010 (2010-03-25), pages 1-9,
- Anonymous: "Ferritkern", Wikipedia, 30 April 2010 (2010-04-30), pages 1-7,
- Anonymous: "Kontaktlose Energieübertragung MOVITRANS® Projektierung", Handbuch, June 2007 (2007-06), pages 1-127,

## Beschreibung

Die Erfindung betrifft ein System zur kontaktlosen Energieübertragung.

Aus der EP 0 968 559 B1 ist ein Verfahren zur berührungslosen Energieübertragung bekannt, bei der einer Sekundärwicklung eine Kapazität parallel zugeschaltet ist und der Ausgangsstrom des so gebildeten Schwingkreises einem Stromrichter-Stellglied zugeführt wird. Dabei wird das Stellglied von einem Regler derart angesteuert, dass einem von dem Schwingkreis versorgten Verbraucher eine möglichst konstante Spannung zur Verfügung stellbar ist.

Aus der US 2010/0072214 A1 ist eine resonante kontaktlose Radiofrequenz-Leistungskopplung mit einem Gehäuse bekannt, das Sekundärwicklung und Gleichrichter enthält.

Aus der US 2006/267523 A1 ist ein Verfahren zur Übertragung von Energie an kapazitive Aktuatoren bekannt. Sie offenbart ein System zur kontaktlosen Energieübertragung nach dem Oberbegriff des Anspruchs 1.

Aus der EP 1 253 695 A2 ist ein System zur drahtlosen Übertragung elektrischer Leistung bei Kleidungsstücken bekannt.

Aus der EP 0 933 865 A1 ist ein hocheffizienter DC/DC-Konverter mit einer Ansteuerschaltung bekannt, die den Halbleiterschalter abhängig vom Spannungsabfall am Schalter ansteuert.

Der Erfindung liegt daher die Aufgabe zugrunde, eine Vorrichtung zur berührungslosen Energieübertragung in kompakter Weise weiterzubilden.

Erfindungsgemäß wird die Aufgabe bei dem System nach den in Anspruch 1 angegebenen Merkmalen gelöst.

Wichtige Merkmale der Erfindung bei dem elektronischen Gerät, insbesondere Übertragerkopf, sind, dass das Gerät ein Gehäuse aufweist, welches eine Sekundärwicklung und einen Gleichrichter aufweist,
insbesondere wobei die Sekundärwicklung den Gleichrichter speist,
wobei der Gleichrichter aus der Sekundärwicklung versorgt wird, insbesondere also elektrisch verbunden ist mit der Sekundärwicklung.

Von Vorteil ist dabei, dass nur ein einziges und gemeinsames Gehäuse für beide Komponenten verwendbar ist. Somit ist eine kompakte Anordnung erreichbar, obwohl die Komponenten Wärme erzeugen.

Bei einer vorteilhaften Ausgestaltung weist der vom Gehäuse umgebene Innenraum Vergussmasse auf, insbesondere welche zwischen Gehäuse und Sekundärwicklung und/oder Gleichrichter angeordnet ist. Von Vorteil ist dabei, dass eine verbesserte Wärmeableitung von den Wärme erzeugenden Komponenten ans Gehäuse ermöglicht ist.

Bei einer vorteilhaften Ausgestaltung ist der Gleichrichter ein Synchrongleichrichter. Also ist der Gleichrichter ein "aktiven Gleichrichter", bei dem die Halbleiterschalter des Gleichrichters nicht mit den Schaltsignalen der Einspeisung synchronisiert werden, sondern der Spannungsabfall über den Halbleiterschaltern gemessen und diese entsprechend geschaltet werden. Von Vorteil ist dabei, dass die Wärmeerzeugung verringert ist, da der Synchrongleichrichter im Vergleich zu einem Gleichrichter aus passiven Halbleiterdioden weniger Verlustwärme erzeugt.

Bei einer vorteilhaften Ausgestaltung weist der Gleichrichter parallel geschaltete Halbbrücken auf, wobei jede Halbbrücke aus einer Reihenschaltung von ansteuerbaren Halbleiterschaltern besteht,
insbesondere wobei die jeweiligen Ansteuersignale für die Halbleiterschalter von einer jeweiligen Ansteuerschaltung erzeugt werden, die aus der Ausgangsspannung des Gleichrichters, insbesondere also aus einer unipolaren Spannung, insbesondere Gleichspannung, versorgt ist. Von Vorteil ist dabei, dass ein kostengünstiger, wenig aufwendiger und verlustarmer Gleichrichter verwendet wird.

Bei einer vorteilhaften Ausgestaltung ist eine Kapazität mit dem Ausgang des Gleichrichters verbunden, wobei die Kapazität vom Gehäuse gehäusebildende umgeben ist, insbesondere zusammen mit dem Gleichrichter und der Sekundärwicklung. Von Vorteil ist dabei, dass am Gleichrichter ausgangsseitig statt einer nur unipolaren Spannung eine Gleichspannung zur Verfügung stellbar ist.

Bei einer vorteilhaften Ausgestaltung ist der Wärmeübergangswiderstand von der Sekundärwicklung beziehungsweise vom Gleichrichter über das Gehäuse zur Umgebung, insbesondere über die Vergussmasse und das Gehäuse zur Umgebung, geringer als auf jedem anderen Wärmeleitpfad,
insbesondere wobei die Umgebung Luft und/oder ein mit dem Gehäuse verbundenes Halteteil ist. Von Vorteil ist dabei, dass die Wärmeableitung verbessert ist.

**Erfindungsgemäß** ist das Gehäuse zumindest metallische Komponenten aufweist und/oder aus Metall gefertigt, insbesondere zur elektromagnetischen Abschirmung,
insbesondere wobei das Gehäuse eine Ausnehmung aufweist, durch welche ein von der Sekundärwicklung zumindest teilweise umwickelt umgebener Ferritkern hindurchragt. Von Vorteil ist dabei, dass die elektromagnetische Verträglichkeit verbessert ist und trotzdem eine starke induktive Kopplung zu einem Primärleiter besteht.

Wichtige Merkmale bei dem System zur kontaktlosen Energieübertragung sind, dass es einen Primärleiter aufweist und ein vorgenanntes elektronisches Gerät,
wobei die Sekundärwicklung an den Primärleiter derart induktiv gekoppelt angeordnet ist und ein mittelfrequenter Wechselstrom in den Primärleiter einprägbar ist, so dass Energie vom Primärleiter an die Sekundärwicklung kontaktlos, insbesondere induktiv, übertragbar ist. Von Vorteil ist dabei, dass eine sehr kompakte Anordnung erreichbar ist.

Bei einer vorteilhaften Ausgestaltung wird der Spannungsabfall am Halbleiterschalter, insbesondere MOSFET oder IGBT, erfasst und wird mittels der Ansteuerschaltung abhängig von dem erfassten Signal ein Ansteuersignal für den Halbleiterschalter erzeugt. Von Vorteil ist dabei, dass die Verluste des Gleichrichters reduzierbar sind.

Bei einer vorteilhaften Ausgestaltung ist jeder steuerbare Halbleiterschalter des Gleichrichters aus einer Parallelschaltung von zwei oder mehr Halbleiterschaltern, insbesondere IGBT oder MOSFET, zusammengesetzt zur Reduzierung der Verlustleistung. Von Vorteil ist dabei, dass eine erhöhte Leistung und/oder eine Reduzierung der Verlustleistung erreichbar ist. Jeder steuerbare Halbleiterschalter kann also anstatt der Parallelschaltung auch durch mehrere in Reihe geschaltete Mosfets ersetzt werden. Kombinationen aus Parallelschaltung und Reihenschaltung sind auch möglich. Beispielsweise kann eine 600 V Diode durch 3 200V Mosfets ersetzt werden. Bei 200V können dann auch jeweils schnelle 200V Schottky-Dioden verwendet werden.

Bei einer vorteilhaften Ausgestaltung ist das elektronische Gerät an einem Fahrzeug angeordnet, insbesondere als Übertragerkopf, zur Versorgung des Antriebs des Fahrzeugs. Von Vorteil ist dabei, dass das Fahrzeug kontaktlos versorgbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

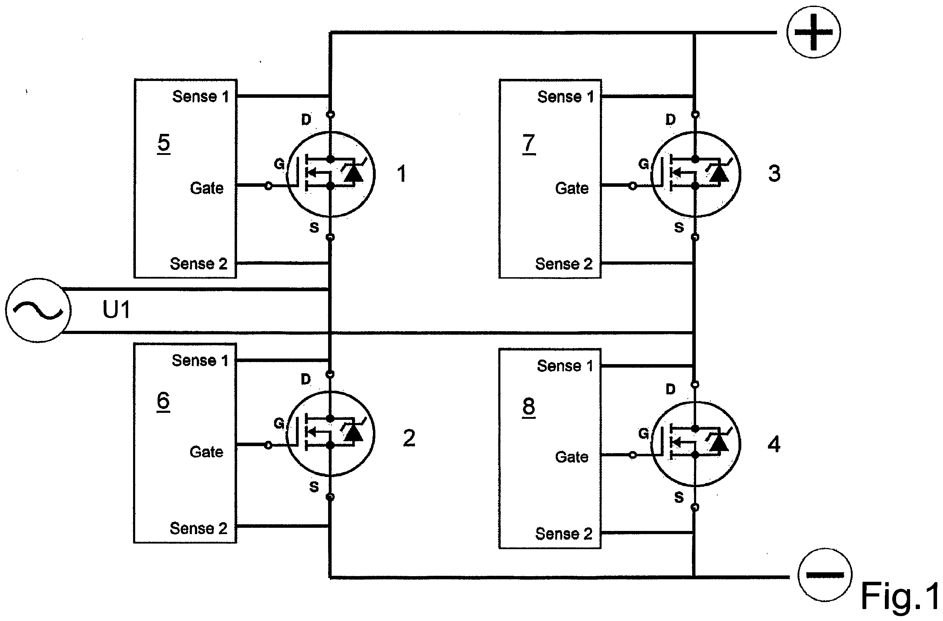

In der Figur 1 ist ein Synchrongleichrichter gezeigt. Dabei wird die Wechselspannung U1 an die Abzweigungen von zwei Halbbrücken geführt, die jeweils aus einer Reihenschaltung aus zwei steuerbaren Schaltern (1, 2) beziehungsweise (3, 4) bestehen.

Die zwei Halbbrücken sind parallel geschaltet und somit an einem oberen Potential + und an einem unteren Potential - verbunden.

Jeder steuerbare Schalter besteht aus einem Halbleiterschalter, wie MOSFET oder IGBT, dem eine Freilaufdiode parallel zugeschaltet ist. Der Halbleiterschalter (1, 2, 3, 4) wird jeweils von einer Ansteuereinheit (5, 6, 7, 8) mit einem jeweiligen Ansteuersignal versorgt, wobei der jeweiligen Ansteuereinheit, die am Schalter anliegende Spannung zugeführt wird.

Auf diese Weise ist ein Gleichrichter geschaffen, der aus einer Wechselspannung U1 eine unipolare Spannung erzeugt. Insbesondere durch Anordnen einer Kapazität zwischen dem oberen Potential + und dem unteren Potential - wird ausgangsseitig sogar eine Gleichspannung erzeugbar.

Der in Figur 1 dargestellte Gleichrichter versorgt sich aus der über die Wechselspannung zugeführten Leistung und benötigt somit keine zusätzliche Spannungsquelle zur Versorgung der Ansteuereinheiten (5, 6, 7, 8).

Die Verlust-Wärme-Erzeugung des Gleichrichters ist durch die in Figur 1 dargestellte Ausführung als Synchrongleichrichter äußerst gering, insbesondere im Vergleich zu einer entsprechenden Gleichrichterschaltung, welche statt der steuerbaren Schalter (1, 2, 3, 4) nur passive Halbleiter-Dioden aufweist.

Somit ist bei einem System zur induktiven Energieübertragung, insbesondere an eine bewegte Einheit, der Synchrongleichrichter zusammen mit der Sekundärwicklung in einem gemeinsamen Gehäuse anordenbar. Denn die Wärmeentwicklung des Synchrongleichrichters und der Sekundärwicklung ist derart gering, dass die Temperatur keinen kritischen Wert übersteigt. Dabei erfolgt die Entwärmung beider Komponenten über das Gehäuse an die Umgebung.

Das Gehäuse ist in hoher Schutzart ausgeführt, insbesondere wasserdicht oder zumindest spritzwasserdicht.

Das Gehäuse ist aus Metall, insbesondere Aluminium oder Stahlblech ausgeführt, wodurch eine gute Wärmeleitfähigkeit erreichbar ist und somit die Wärme effektiv an die Umgebung abführbar ist.

Bei geeigneter Wahl des Metalls, beispielsweise Stahl, ist eine effektive elektromagnetische Abschirmung erreichbar. Die Sekundärwicklung ist um einen Ferritkern gewickelt, welcher durch das Gehäuse durchgeführt ist, also durch entsprechende Ausnehmungen geführt ist, damit ein hoher Anteil des von der Primärleitung erzeugten Magnetfeldes durch den Ferritkern geleitet wird und somit eine starke induktive Kopplung der Sekundärwicklung an den Primärleiter erreicht wird.

Da der Synchrongleichrichter über seinen Gleichspannungsausgang versorgt ist, ist keine weitere zusätzliche Versorgung des Synchrongleichrichters notwendig.

Darüber hinaus ist im Gehäuse auch eine am Gleichspannungsausgang anliegende Kapazität angeordnet. Diese ist auch als Zwischenkreiskondensator bezeichenbar und glättet die unipolare Spannung, so dass sie als Gleichspannung bezeichenbar ist.

Auf diese Weise ist auch ein Herausführen der Wechselstrom-führenden Anschlüsse der Sekundärwicklung aus dem Gehäuse verzichtbar. Der sicherheitsgerichtete Aufwand ist somit reduziert. Außerdem ist das Bordnetz vor Störungen schützbar und es sind verringerte EMV Maßnahmen notwendig. Darüber hinaus ist die erfindungsgemäße Anordnung kompakt ausführbar und es ist kein weiteres Gehäuse nötig

Der Primärleiter wird mit einem Wechselstrom beaufschlagt, dessen Frequenz im Bereich zwischen 10 und 1000 kHz liegt. Der Sekundärwicklung ist auch eine weitere Kapazität direkt parallel und/oder in Reihe zugeschaltet, so dass die zugehörige Resonanzfrequenz der Frequenz des in den Primärleiter eingeprägten Wechselstromes im Wesentlichen entspricht. Somit ist ein hoher Wirkungsgrad bei der kontaktlosen Energieübertragung erreichbar, insbesondere auch bei Abstandsschwankungen zwischen Primärleiter und Sekundärwicklung. Die weitere Kapazität ist ebenfalls im Gehäuse vorgesehen und somit geschützt, entwärmt und abgeschirmt von diesem.

Die bewegte Einheit ist beispielsweise ein Mobilteil oder ein Fahrzeug, insbesondere Schienenfahrzeug oder bodenbewegliches Fahrzeug. Ein elektrischer Antrieb der bewegten Einheit ist aus dem Gleichspannungsausgang versorgbar. Dabei ist die am Gleichspannungsausgang anliegende Kapazität derart groß wählbar, dass auch zeitabschnittsweise die induktive Kopplung zwischen Primärleiter und Sekundärwicklung verzichtbar ist, weil die Kapazität den Energiebedarf während des Zeitabschnitts abpuffert.

Bei weiteren erfindungsgemäßen Ausführungsbeispielen wird der Gleichrichter nicht einphasig wie in Figur 1, sondern mehrphasig ausgeführt. Somit ist die zugeführte Wechselspannung mehrphasig und die Anzahl der parallel geschalteten Halbbrücken entspricht der Phasenanzahl.

### Bezugszeichenliste

- 1: steuerbarer Schalter
- 2: steuerbarer Schalter
- 3: steuerbarer Schalter
- 4: steuerbarer Schalter
- 5: Ansteuerschaltung
- 6: Ansteuerschaltung
- 7: Ansteuerschaltung
- 8: Ansteuerschaltung

- U1: Wechselspannung
- +: oberes Potential
- -: unteres Potential

## Patentansprüche

1. System zur kontaktlosen Energieübertragung, aufweisend
- einen Primärleiter, in den ein mittelfrequenter Wechselstrom einprägbar ist,
- eine Sekundärwicklung, die an den Primärleiter derart induktiv gekoppelt angeordnet ist, so dass Energie vom Primärleiter an die Sekundärwicklung kontaktlos und induktiv übertragbar ist,
- einen Synchrongleichrichter, der aus der Sekundärwicklung versorgt wird und parallel geschaltete Halbbrücken aufweist, wobei jede Halbbrücke aus einer Reihenschaltung von ansteuerbaren Halbleiterschaltern besteht,
- eine Kapazität, die mit dem Ausgang des Synchrongleichrichters verbunden ist,
- ein Gehäuse,
**gekennzeichnet dadurch dass**
- das Gehäuse, die Sekundärwicklung, den Synchrongleichrichter und die Kapazität gehäusebildend umgibt,
- der Spannungsabfall am Halbleiterschalter erfasst wird und mittels einer jeweiligen Ansteuerschaltung abhängig von dem erfassten Signal ein Ansteuersignal für den Halbleiterschalter erzeugt wird, und
- die Ansteuerschaltungen aus der Ausgangs-Gleichspannung des Synchrongleichrichters versorgt sind,
- das Gehäuse zumindest metallische Komponenten aufweist und/oder aus Metall gefertigt ist, insbesondere zur elektromagnetischen Abschirmung,
- das Gehäuse eine Ausnehmung aufweist, durch welche ein von der Sekundärwicklung zumindest teilweise umwickelt umgebener Ferritkern hindurchragt.

2. System nach Anspruch 1,
**dadurch gekennzeichnet, dass**
der vom Gehäuse umgebene Innenraum Vergussmasse aufweist, insbesondere welche zwischen Gehäuse und Sekundärwicklung und/oder Gleichrichter angeordnet ist.

3. System nach mindestens einem der vorangegangenen Ansprüche,
**dadurch gekennzeichnet, dass**
der Wärmeübergangswiderstand von der Sekundärwicklung beziehungsweise vom Gleichrichter über das Gehäuse zur Umgebung, insbesondere über die Vergussmasse und das Gehäuse zur Umgebung, geringer ist als auf jedem anderen Wärmeleitpfad,
insbesondere wobei die Umgebung Luft und/oder ein mit dem Gehäuse verbundenes Halteteil ist.

4. System nach mindestens einem der vorangegangenen Ansprüche,
**dadurch gekennzeichnet, dass**
jeder steuerbare Halbleiterschalter des Gleichrichters aus einer Parallelschaltung von zwei oder mehr Halbleiterschaltern, insbesondere IGBT oder MOSFET, zusammengesetzt ist zur Reduzierung der Verlustleistung.

5. System nach mindestens einem der vorangegangenen Ansprüche,
**dadurch gekennzeichnet, dass**
das elektronische Gerät an einem Fahrzeug angeordnet ist, insbesondere als Übertragerkopf, zur Versorgung des Antriebs des Fahrzeugs.

## Claims

1. System for contactless energy transfer, comprising
- a primary conductor, in which a medium-frequency AC current can be impressed,
- a secondary winding which is arranged in a manner inductively coupled to the primary conductor such that energy can be transferred contactlessly and inductively from the primary conductor to the secondary winding,
- a synchronous rectifier which is supplied from the secondary winding and which has half-bridges connected in parallel, wherein each half-bridge consists of a series connection of actuatable semiconductor switches,
- a capacitor which is connected to the output of the synchronous rectifier,
- a housing,
**characterized in that**
- the housing encloses the secondary winding, the synchronous rectifier and the capacitor in a housing-forming manner,
- the voltage drop across the semiconductor switch is detected and an actuation signal for the semiconductor switch is generated by means of a respective actuation circuit as a function of the detected signal, and
- the actuation circuits are supplied from the output DC voltage of the synchronous rectifier,
- the housing at least has metal components and/or is made of metal, in particular for electromagnetic shielding,
- the housing has a cutout, through which a ferrite core protrudes, said ferrite core being enclosed by the secondary winding that is at least partially wound therearound.

2. System according to claim 1,
**characterized in that**
the interior enclosed by the housing contains potting compound, in particular which is arranged between the housing and the secondary winding and/or the rectifier.

3. System according to at least one of the preceding claims,
**characterized in that**
the heat transfer resistance from the secondary winding and/or from the rectifier via the housing towards the surroundings, in particular via the potting compound and the housing towards the surroundings, is lower than on any other heat conduction path, in particular wherein the surroundings is air and/or a holding part connected to the housing.

4. System according to at least one of the preceding claims,
**characterized in that**
each controllable semiconductor switch of the rectifier is composed of a parallel connection of two or more semiconductor switches, in particular IGBTs or MOSFETs, in order to reduce the power loss.

5. System according to at least one of the preceding claims,
**characterized in that**
the electronic device is arranged on a vehicle, in particular as a transmitter head, for supplying the drive of the vehicle.

## Revendications

1. Système de transmission d'énergie sans contact, présentant
- un conducteur primaire dans lequel un courant alternatif à moyenne fréquence peut être injecté,
- un enroulement secondaire qui est disposé en couplage inductif avec le conducteur primaire de telle sorte que de l'énergie puisse être transmise du conducteur primaire à l'enroulement secondaire sans contact et par induction,
- un redresseur synchrone qui est alimenté par l'enroulement secondaire et qui présente des demi-ponts montés en parallèle, chaque demi-pont étant constitué d'un circuit série de commutateurs à semi-conducteur commandables,
- un condensateur relié à la sortie du redresseur synchrone,
- un boîtier,
**caractérisé en ce que**
- le boîtier entoure l'enroulement secondaire, le redresseur synchrone et le condensateur en formant un boîtier,
- la chute de tension au commutateur à semi-conducteur est détectée et un signal de commande pour le commutateur à semi-conducteur est généré au moyen d'un circuit de commande respectif en fonction du signal détecté, et
- les circuits de commande sont alimentés par la tension continue de sortie du redresseur synchrone,
- le boîtier présente au moins des composants métalliques et/ou est constitué de métal, en particulier pour le blindage électromagnétique,
- le boîtier présente un évidement à travers lequel un noyau de ferrite entouré au moins partiellement par l'enroulement secondaire fait saillie.

2. Système selon la revendication 1,
**caractérisé en ce que**
l'espace intérieur entouré par le boîtier présente une masse de scellement qui est disposée en particulier entre le boîtier et l'enroulement secondaire et/ou le redresseur.

3. Système selon au moins l'une des revendications précédentes,
**caractérisé en ce que**
la résistance de transfert de chaleur de l'enroulement secondaire ou du redresseur à l'environnement par le boîtier, en particulier par la masse de scellement et le boîtier, est plus faible que par tout autre trajet de conduction de chaleur.
l'environnement étant en particulier de l'air et/ou une partie de retenue reliée au boîtier.

4. Système selon au moins l'une des revendications précédentes,
**caractérisé en ce que**
chaque commutateur à semi-conducteur commandable du redresseur est composé d'un montage en parallèle de deux ou plusieurs commutateurs à semi-conducteur, en particulier IGBT ou MOSFET, pour réduire la puissance dissipée.

5. Système selon au moins l'une des revendications précédentes,
**caractérisé en ce que**
l'appareil électronique est disposé sur un véhicule, en particulier sous la forme d'une tête de transmission, pour alimenter l'entraînement du véhicule.
